# EUROPEAN PATENT APPLICATION

(11) **EP 3 266 748 A1**
(43) Date of publication of application: **10.01.2018**
(21) Application number: 16178273.5
(22) Date of filing: 06.07.2016
(51) Int. Cl.: C02F 1/28, B01J 20/24, C02F 101/20

(54) **LOW COST LIGNIN-BASED ADSORPTION MATERIALS FOR WATER TREATMENT**

(71) Applicant: Clariant International Ltd, 4132 Muttenz (CH)
(72) Inventor: GILLISSEN, Martijn, 65929 Frankfurt am Main (DE); KRÖHNKE, Christoph, 79206 Breisach (DE); KOCH, Achim, 85368 Moosburg (DE)
(74) Representative: Holmes, Rosalind

(57) **Abstract**

Lignin-based adsorption materials for treatment of contaminated fluids, wherein the lignin adsorption material is a high molecular weight, crosslinked lignin residue (A), resulting from a steam pre-treatment process of a lignocellulosic residue followed by the removal of the major part of the cellulose and hemicellulose components and preferably .,
the lignin residue (A) is gained from wheat straw, sugar cane bagasse or other agricultural residues.

The invention further relates to a process for removal of metals from contaminated fluids by employing a lignin based adsorption material, comprising the following steps:
a. Contacting a lignin residue (A) with a to be treated metal contaminated fluid (B).
b. Separating the treated fluid from the residue to obtain a fluid with reduced metal content (C) and a metal containing solid residue (D).
c. Disposal of the treated fluid with reduced metal content (C). and
d. Disposal of the metal containing residue (D).

## Description

This invention relates to lignin based materials having metal binding properties and their use in removing such compounds from contaminated waters. The materials show utility in the removal and/or recovery of metal from contaminated waters, such as industrial or municipal effluents.

Frequently, (heavy) metal species are contaminants found in fluid phases, such as natural, industrial and municipal waters. It is well known that such species, including copper, lead, cadmium, mercury and others, can have significant undesirable health and environmental consequences. Therefore, removal such metallic species from contaminated fluids is of utmost importance and is generally required by environmental regulations. Also the removal of radionuclides from contaminated fluids is of great interest. Alternately, concentration of precious metals such as gold, silver and platinum present in certain fluids can be of economic interest.

Conventionally, the removal of (heavy) metal species from contaminated fluids (especially waters) is effected by means of precipitation and more recently adsorption onto, for example, activated carbons or ion-exchange resins. All these processes have their limitations. Where precipitation requires large amounts of chemicals and leads to significant amounts of sludge, activated carbon (AC) and ion-exchange resins are relatively expensive. (Barakat, 2011) (Fu, 2011)

As an alternative to the relatively costly activated carbons and ion-exchange resins, considerable research effort has been spent on the development of low-cost adsorbents. Such low-cost adsorbents are based on, for example: lignocellulosic materials, industrial waste or low-cost natural inorganic materials. Various lignocellulosic materials show promising adsorption properties when compared to commercial AC or ion-exchange resins. (Kumar, 2006) (Kurniawan, 2006) (Sud, 2008) For example, WO2014012134 A1 claims the use of waste lignocellulosic biomass, such as sugarcane bagasse, as an adsorbent material for metal ions such as lead, copper and zinc. CN1161281 C, describes the preparation of steam exploded straw modified with zinc or iron chloride solutions as adsorbent for heavy metal ions such as chrome. However, upon direct use of lignocellulosic waste as adsorption material the potential use of the cellulosic and/or hemi-cellulosic components towards high value products is lost.

A more preferable, resource efficient route to low cost adsorbents would be the utilization of the cellulose and/or hemicellulose components in lignocellulosic materials in for example paper production or biorefinery concepts, such as second generation ethanol production.. The residual lignin components contain a large quantity of oxygen-containing functional groups (such as phenolic, hydroxyl, ether and carbonyl structures), which are capable of forming lignin-metal complexes. These lignin components could therefore be utilized in adsorbent materials Conversion of lignocellulosic materials to products often comprises a physicochemical pre-treatment step. In the production of paper, mainly sulfite, sulfate and soda pulping treatment are used to separate cellulose fibers from the lignocellulosic matrix. The resulting lignins (The alkali lignins: Kraft-lignin (sulfate-lignin) and soda-lignin and the acidic lignin lignosulfonate (sulfite-lignin)) have a rather low molecular weight and are soluble in aqueous media. Pre-treatment methods described for biorefinery concepts utilizing organic solvents and/or acids, generally termed organosolv processes, also separate the cellulose, hemicellulose and lignin. Here also low molecular weight lignins are obtained which are soluble in various organic solvents or aqueous mixtures with organic solvents.

Chandra et al. (2007) describes that hydrothermal pre-treatment in the absence or presence of dilute acid is a preferable method to reduce biomass recalcitrance to hydrolysis as it mobilizes hemicellulose and partially depolymerizes lignin without solubilization. This so-called steam pre-treatment is therefore frequently utilized in biorefineries. For example, EP 2471940 A1 describes a process for the hydrolysis of lignocellulosic biomass with integrated enzyme production. The process converts the optionally pre-treated lignocellulosic biomass into a slurry of fermentable monomeric sugars, which can be further converted into ethanol or other useful chemicals. The biomass hydrolysate containing a sugar-rich supernatant and solid lignin rich residues can be subjected to a solid/liquid separation procedure, yielding an insoluble lignin fraction.

The current invention uses such inherently insoluble lignin materials as adsorption material for metal species from contaminated fluids.

It is known by a person skilled in the art that lignin has the capacity to bind metal species. Predominantly, investigations have been focused on utilizing the commercially available technical lignins (Kraft, soda and lignosulphonate lignins), with a more limited number of investigations concerning organosolv or enzymatic hydrolysis lignin. For example, US 2269315 claims the use of lignin prepared by alkaline treatment of biomass (such as that from paper production) followed by acidic precipitation for use as metal adsorbent.

Investigations of the adsorption capacity of technical lignins show a large variety in performance. Whereas exceptionally high values are reported in some cases, generally these are considered to be inferior to activated carbon for metal ion removal. (Srivastava, 1994) (Suhas, 1998) Moreover, as also noted by some authors, the solubility at elevated pH for the technical lignins limits their applicability. (Demirbas, 2004) (Varna, 1989) The latter is especially disadvantageous as adsorption, depending on the metal species in solution, is expected to be significantly enhanced at these elevated pH values. (Zhou, 2010)

Physically or chemically modified lignins or blends of lignin with other materials have been more intensively investigated and reported. Lignin can be modified by, for example, graft polymerization, Mannich reactions or other chemical modifications to improve the adsorption capacities and/or reduce the solubility of the resulting materials. (Ge, 2014) (Lue, 2013) Additionally, blends with lignin or particularly carbonization of lignin has been applied to enhance the adsorption properties of lignin. (Suhas, 1998) (Klapiszewski, 2015)

The processes described in the prior art that leads to such and other modifications result in more costly materials, which in many cases are not based on 100% renewable feedstock. Moreover, reactants and/or additives used in the modification process may remain in the material, leading to unwanted side-effects or secondary pollution.

To prior art processes involving lignocellulosic- and lignin-derived materials for treatment of metal contaminated waters disclose some drawbacks, which are overcome by the present invention.
- Wherever unmodified lignosulfonate, Kraft- or Soda-lignin is used, the material is a least partially soluble in aqueous media and may transfer bound heavy metal ions into the aqueous phase.
- Wherever unmodified lignosulfonate, Kraft- or Soda-lignin is used, at elevated pH the materials become increasingly soluble in aqueous media and may transfer bound heavy metal ions into the aqueous phase.
- Wherever unmodified organosolv lignin, lignosulfonate, Kraft- or Soda-lignin is used, the low molecular weight fractions may transfer bound heavy metal ions into the fluid phase.
- Modification of lignin materials by chemical and/or physical means unavoidably results in increased expenditures in manufacturing. Additionally reactants and/or additives may remain in the material, leading to unwanted side-effects or secondary pollution.
- Whereas the use of unmodified lignocellulosic materials as adsorbent materials avoid the costs attributed to chemical modification. Conversion of the cellulose and/or hemi-cellulose fraction of these materials to high value products would be of great economic and ecologic value.

Surprisingly, these shortcomings are overcome by the instant invention, while maintaining the good adsorption capabilities of lignin compounds, by using the lignin residue from lignocellulosic material treated by a steam pre-treatment process and subsequent removal of the cellulosic and hemicellulosic fractions. Therefore the instant invention refers to lignin-based adsorption materials for treatment of fluids , wherein the lignin adsorption material is a high molecular weight, crosslinked lignin residue (A), resulting from a steam pre-treatment process of a lignocellulosic residue followed by the removal of the major part of the cellulose and hemicellulose components.

Preferably the lignin residue (A) is gained from wheat straw, sugar cane bagasse or other agricultural residues.

Moreover, the instant invention refers to a process for removal of metals from contaminated fluids by employing a lignin based adsorption material as described before, comprising the following steps:
a. Contacting a lignin residue (A) with a to be treated metal contaminated fluid (B).
b. Separating the treated water from the residue to obtain a fluid with reduced metal content (C) and a metal containing solid residue (D).
c. Disposal of the treated fluid with reduced metal content (C).
d. Disposal of the metal containing residue (D).

The residue (D) comprises the lignin residue (A) with the adsorbed metal contaminations.

In a further embodiment the instant invention refers to the use of a lignin residue obtained from a steam pre-treatment process of lignin residues of wheat straw, sugar cane bagasse or other agricultural residues followed by the removal of the major part of the cellulose and hemicellulose components, as adsorption material for metal contaminated fluids. The lignin residues (A) used according to the present invention, are lignin materials having a high molecular weight, a crosslinked nature and a high capability for metal adsorption, such as those resulting from a steam pre-treatment process followed by the removal of the major part of the cellulose and hemicellulose components such as described in EP 2471940 A1.
Lignin in general is found as a biopolymer in plants, e.g. wood or agricultural crops, which contain cellulose, hemicellulose and lignin. Traditionally the major source of lignin materials derives from the paper industry. Here lignocellulosic biomass is treated in a so-called pulping process (i.e. Kraft, sulfite or soda pulping) where the lignin and hemicellulose are solubilized in water, leaving the cellulose fibers which are subsequently used in paper production. More recently, enzymatic bioethanol-producing processes and other biorefinery concepts convert the cellulose and hemicellulose, but leave the lignin behind, which is usually burnt to gain energy for the process. The respective biorefinery concept is known to a person skilled in the art.

According to the present invention, the preferred lignin is gained from agricultural residues, i.e. the group comprising wheat straw, rye straw, barley straw, oat straw, triticale straw, rice straw, corn stover, bagasse, hemp, sisal, sorghum or a mixture of these. Due to the exploitation process of gaining those agricultural residues from the fields, it is possible that fractions of other plants like grass are processed together with the given agricultural residues. However, this is not explicitly mentioned further. In a preferred embodiment the lignin is gained from wheat straw. In another preferred embodiment the lignin is gained from sugarcane bagasse, but besides the given agricultural residues in principle any lignin-containing source may be utilized, e.g. also hard- and softwood.

Compared to paper-industry-derived lignins, which are mostly Kraft lignin and lignosulfonates with a relatively high sulfur content and a high solubility in aqueous media, these lignins from straw or other agricultural residues are practically insoluble in water, have low sulfur content, but a considerable amount of residual carbohydrates, protein and ash, stemming from the production process and from the plant source, respectively.

In process step a., a contaminated fluid (B) is contacted with the above defined lignin containing residue (A).

The contaminated fluid (B) to be treated is chosen from the group comprising gasses, vapours and liquids. Examples of such fluids are process water, drinking water or sewage water, others examples are waste gases from power plants or cement facilities and contaminated hydrocarbons such as crude oil. "Process water" is defined as being water for technical, industrial, agricultural or domestic applications usually having a lower purity than drinking water. "Sewage water" is defined as being water that has been polluted by its use, e.g. industrial effluent, municipal effluent, mining effluent, effluent from brewery and beverage industry, agricultural effluent and any contaminated water from landfill or rainwater coming from paved area.

The treatment time in step a., i.e. the time component (A) is brought in contact with component (B), depends on the specific types of contaminants present in component (B), the temperature as well as on the contamination level of component (B), respectively. Preferably the treatment time lies between 3 and 1440 minutes, more preferably between 5 and 720 minutes, even more preferably between 10 and 180 minutes.
Preferably the mixture is stirred, shaken or in some way interspersed during the treatment time to guarantee a good interaction of (A) and (B).

The treatment temperature, i.e. the temperature (in deg. C) at which component (A) is brought in contact with component (B) of the present invention, depends mainly on the temperature at which component (B) is acquired. Additionally lower and upper boundaries are given by the phase transition temperatures of component (B), e.g. on the freezing point (0°C or below) and boiling point of water (100°C or above). Moreover the upper treatment temperature is limited by the degradation temperature of component (A), 250 °C. Preferably the treatment temperature lies between the freezing point of component (B) and 250 °C.

The relative amount of component (A) is chosen according to the degree of pollution of the contaminated fluid (B) as specified above. Depending on the demands of the treatment procedure component (A) is used in solid form as tablets, granulate, fine granulate, powder or in liquid form as suspension or dispersion.

Particularly in aqueous media, the pH of the mixture of component (A) and (B) is of importance. By choosing the appropriate pH, adsorption of the metal component to component (A) can be enhanced. The suitable pH is dependent on the metal species present in component (B) and can easily be determined by a person skilled in the art. If needed, the pH can be adjusted by acid or base, e.g. hydrochloric acid and sodium hydroxide, respectively.

In step b. of the present invention, component (A) and component (B) are separated to yield a liquid phase with reduced metal content (C) and a metal containing solid residue (D). Traditional processes for liquid-solid separations like filtration, sedimentation, centrifugation, decantation or flotation are appropriate for this step. Alternatively, a continuous contact and separation of components (A) and (B) via a continuously stirred reactor, column or similar processes can be applied.

Surprisingly it was found as an additional valuable technical feature of the entire process that the adsorption of the metal component in largely irreversible, minimizing the danger of leaching of the adsorbed contaminants from the metal containing residue (D). Such a behavior furthermore qualifies this invention for the safe removal also for larger scale metal contaminations. It is remarkable and has to be pointed out that even by addition of mineral acids the absorbed metal can be kept inside the scaffold of the lignin based absorber according to the present invention. On the other hand valuable metal ions such as ions of precious metals can be concentrated inside such an absorber and regained afterwards by suitable consecutive techniques.

The process according to the present invention effectively binds (heavy) metal species, such as lead, cadmium, chromium and mercury.

### Examples:

The process and materials used in the process according to the present invention are described by non-restricting examples as follows.

### Materials:

Lignin (1): Bagasse processed as described in EP 2471940 A1
Lignin (2): Wheat straw processed as described in EP 2471940 A1

Cd(NO₃)₂·4 H₂O, MnCl₂·4 H₂O, Cryl₃·6 H₂O, CuCl₂·2 H₂O, HgCl₂, Dowex MAC-3 hydrogen form, Alkali Lignin low sulfonate content was purchased from Sigma-Aldrich. Sea sand, Pb(NO₃)₂, activated carbon and ion exchanger IV were purchased from Merck. Borresperse CA, Borretan 101, Borretan 103, Wanin 734 were obtained from Borregaard.

CIMV- Lignin was obtained from CIMV.

### Abbreviations used:

Initial concentration: *Ci*
Final concentration: Cf
Percentage of metal bound: *Ads*
Mass of metal bound per mass of adsorbent: q
Inductively coupled plasma optical emission spectrometry: ICP-OES

### Example 1: Adsorption of various metal cations on lignin (1) according to this invention

Solutions of 25-1000 mg/kg of Hg(II), Pb(II), Cd(II), Cu(II), Mn(II), Zn(II) and Cr(III) in demineralized water were prepared by dissolution of the required amount of metal salt to prepare a 1000 mg/kg solution. Subsequently, the 1000 mg/kg stock solutions were diluted out to prepare the desired 25-800 mg/kg solutions.

To 0,5 g of lignin (1) 20 mL of metal solution was added and shaken at room temperature for the duration of 3h. Subsequently, the solid and liquid phases were separated by centrifugation. The initial and final metal content of the aqueous phase were determined by ICP-OES. The results are shown in Table 1.

**Table 1) Adsorption of metal ions on lignin (1)**

| HgCl₂ | | | Pb(NO₃)₂ | | |
|---|---|---|---|---|---|
| Ci | Cf | Ads | Ci | Cf | Ads |
| [mg/kg] | [mg/kg] | [%] | [mg/kg] | [mg/kg] | [%] |
| 1000 | 330 | 67% | 980 | 480 | 51% |
| 600 | 130 | 78% | 600 | 160 | 73% |
| 400 | 1,7 | 100% | 390 | 33 | 92% |
| 300 | 1,1 | 100% | 300 | 16 | 95% |
| 200 | 0,73 | 100% | 200 | 8 | 96% |
| 100 | 0,53 | 99% | 100 | 3,5 | 97% |
| 49 | 0,43 | 99% | 50 | 1,8 | 96% |
| 25 | 0,33 | 99% | 25 | 0,96 | 96% |
| | | | | | |

| Cd(NO₃)₂ | | | CuCl₂ | | |
|---|---|---|---|---|---|
| Ci | Cf | Ads | Ci | Cf | Ads |
| [mg/kg] | [mg/kg] | [%] | [mg/kg] | [mg/kg] | [%] |
| 1000 | 790 | 21% | 2200 | 2100 | 5% |
| 600 | 420 | 30% | 1400 | 1200 | 14% |
| 420 | 230 | 45% | 890 | 760 | 15% |
| 300 | 130 | 57% | 660 | 540 | 18% |
| 200 | 59 | 71% | 450 | 340 | 24% |
| 130 | 21 | 84% | 230 | 120 | 48% |
| 50 | 2,5 | 95% | 120 | 58 | 52% |
| 25 | 0,79 | 97% | 58 | 25 | 57% |
| | | | | | |

| MnCl₂ | | | ZnCl₂ | | |
|---|---|---|---|---|---|
| Ci | Cf | Ads | Ci | Cf | Ads |
| [mg/kg] | [mg/kg] | [%] | [mg/kg] | [mg/kg] | [%] |
| 1000 | 890 | 11% | 1000 | 940 | 6% |
| 600 | 500 | 17% | 600 | 520 | 13% |
| 400 | 310 | 23% | 400 | 320 | 20% |
| 300 | 230 | 23% | 300 | 230 | 23% |
| 200 | 130 | 35% | 200 | 130 | 35% |
| 100 | 51 | 49% | 100 | 50 | 50% |
| 50 | 20 | 60% | 50 | 18 | 64% |
| 25 | 8,1 | 68% | 25 | 4,1 | 84% |
| | | | | | |

| CrCl₃ | | | | | |
|---|---|---|---|---|---|
| Ci | Cf | Ads | | | |
| [mg/kg] | [mg/kg] | [%] | | | |
| 1000 | 960 | 4% | | | |
| 600 | 560 | 7% | | | |
| 400 | 360 | 10% | | | |
| 300 | 260 | 13% | | | |
| 200 | 160 | 20% | | | |
| 100 | 54 | 46% | | | |
| 51 | 12 | 76% | | | |
| 25 | 3,7 | 85% | | | |

The examples show that the capacity of the lignin used according to the invention to bind metals from solution in general and that the binding strength is dependent on the specific metal.

### Example 2: Adsorption of Pb(II) on lignin (1) column

A glass column (having a circumference of 8 cm) was filled with 2 g of lignin (1) giving a bed height of ca. 0,75 cm. On top of the lignin plug a layer of sand was placed to prevent distribution of lignin into the fluid on top of the column. The column volume was estimated to be 2,4 cm³. A 110 ppm solutions of Pb(II) in demineralized water was prepared by dissolution of the required amount of Pb(NO₃)₂.

The prepared Pb(II) solution was led over the lignin (1) column at room temperature to effect removal of the metal from solution. Flow of the Pb(II) solution was effected by hydrostatic pressure and had a flowspeed of ca. 1 mL/min. Under these conditions 25 samples of 10 mL were collected and the initial and final metal content of the aqueous phase were determined by ICP-OES. The results are shown in Table 2.

**Table 2) Adsorption of Pb(II) on a column filled with lignin (1)**

| Sample | Cumulative volume | Column volume | Cf | Ads | Cumulatively bound Pb(II) |
|---|---|---|---|---|---|
| [#] | [mL] | [-] | [mg/kg] | [%] | [mg] |
| 1 | 10 | 4 | 0,05 | 99,95 | 1,1 |
| 2 | 20 | 8 | 0,02 | 99,98 | 2,2 |
| 3 | 30 | 12 | 0,07 | 99,94 | 3,3 |
| 4 | 40 | 16 | 0,52 | 99,53 | 4,4 |
| 5 | 50 | 21 | 0,82 | 99,25 | 5,5 |
| 6 | 60 | 25 | 3,2 | 97,09 | 6,6 |
| 7 | 70 | 29 | 11 | 90,00 | 7,5 |
| 8 | 80 | 33 | 16 | 85,45 | 8,5 |
| 9 | 90 | 37 | 22 | 80,00 | 9,4 |
| 10 | 100 | 41 | 25 | 77,27 | 10,2 |
| 11 | 110 | 45 | 31 | 71,82 | 11,0 |
| 12 | 120 | 49 | 36 | 67,27 | 11,7 |
| 13 | 130 | 53 | 39 | 64,55 | 12,5 |
| 14 | 140 | 58 | 43 | 60,91 | 13,1 |
| 15 | 150 | 62 | 46 | 58,18 | 13,8 |
| 16 | 160 | 66 | 48 | 56,36 | 14,4 |
| 17 | 170 | 70 | 48 | 56,36 | 15,0 |
| 18 | 180 | 74 | 53 | 51,82 | 15,6 |
| 19 | 190 | 78 | 54 | 50,91 | 16,1 |
| 20 | 200 | 82 | 54 | 50,91 | 16,7 |
| 21 | 210 | 86 | 57 | 48,18 | 17,2 |
| 22 | 220 | 90 | 58 | 47,27 | 17,7 |
| 23 | 230 | 95 | 58 | 47,27 | 18,3 |
| 24 | 240 | 99 | 61 | 44,55 | 18,8 |
| 25 | 250 | 103 | 62 | 43,64 | 19,2 |

This example shows the use of continuous contact between a contaminated water and the lignin of the invention as opposed to a batch type experiment used in the other examples.

### Example 3: pH dependence of metal adsorption on lignin (1)

Solutions of 100 mg/kg of Hg(II), Pb(II), Cd(II) and Mn(II) in demineralized water were prepared by dissolution of the required amount of metal salt.

To 0,5 g of lignin (1) 20 mL of metal solution was added, subsequently the pH was adjusted using a NaOH or HCl solution. The mixtures were shaken at room temperature for the duration of 3h. Subsequently, the solid and liquid phases were separated by centrifugation. The initial and final metal content of the aqueous phase were determined by ICP-OES. The results are shown in Table 3.

**Table 3) pH dependent adsorption of metal ions on lignin (1)**

| HgCl₂ | | | Pb(NO₃)₂ | | |
|---|---|---|---|---|---|
| Ci | 100 | [mg/kg] | Ci | 98 | [mg/kg] |
| pH | Cf | Ads | PH | Cf | Ads |
| [-] | [mg/kg] | [%] | [-] | [mg/kg] | [%] |
| 1,0 | 45,0 | 55 | 1,0 | 91 | 7 |
| 3,0 | 38,0 | 62 | 3,0 | 51 | 48 |
| 5,3 | 0,8 | 99 | 5,4 | 6,4 | 93 |
| 7,3 | 4,3 | 96 | 7,0 | 4,3 | 96 |
| 9,1 | 2,0 | 98 | 9,0 | 7,4 | 92 |
| | | | | | |

| Cd(NO₃)₂ | | | MnCl₂ | | |
|---|---|---|---|---|---|
| Ci | 100 | [mg/kg] | Ci | 100 | [mg/kg] |
| pH | Cf | Ads | pH | Cf | Ads |
| [-] | [mg/kg] | [%] | [-] | [mg/kg] | [%] |
| 1,0 | 95,0 | 5 | 1,0 | 84 | 16 |
| 3,0 | 90,0 | 10 | 3,2 | 79 | 21 |
| 5,3 | 15,0 | 85 | 5,1 | 45 | 55 |
| 7,3 | 3,0 | 97 | 7,1 | 11 | 89 |
| 9,1 | 4,5 | 96 | 9,3 | 10 | 90 |

The examples show that the capacity of the lignin of the invention to bind metals from solution is pH dependent.

### Example 4: time dependence of metal adsorption on lignin (1)

Solutions of 100 mg/kg of Hg(II), Pb(II), Cd(II) and Mn(II) in demineralized water were prepared by dissolution of the required amount of metal salt.

To 0,5 g of lignin (1) 20 mL of metal solution was added, subsequently the mixtures were shaken at room temperature for the duration of 0-3h. Subsequently, the solid and liquid phases were separated by centrifugation. The initial and final metal content of the aqueous phase were determined by ICP-OES. The results are shown in Table 4.

**Table 4) time dependent adsorption of metal ions on lignin (1)**

| HgCl₂ | | | Pb(NO₃)₂ | | |
|---|---|---|---|---|---|
| Ci | 100 | [mg/kg] | Ci | 100 | [mg/kg] |
| t | Cf | Ads | t | Cf | Ads |
| [min] | [mg/kg] | [%] | [min] | [mg/kg] | [%] |
| 180 | 0,73 | 99 | 180 | 6,9 | 93 |
| 120 | 0,76 | 99 | 120 | 14 | 86 |
| 60 | 0,72 | 99 | 60 | 8,5 | 92 |
| 30 | 0,7 | 99 | 30 | 16 | 84 |
| 15 | 1,2 | 99 | 15 | 10 | 90 |
| | | | | | |

| Cd(NO₃)₂ | | | MnCl₂ | | |
|---|---|---|---|---|---|
| Ci | 100 | [mg/kg] | Ci | 100 | [mg/kg] |

| t | Cf | Ads | t | Cf | Ads |
|---|---|---|---|---|---|
| [min] | [mg/kg] | [%] | [min] | [mg/kg] | [%] |
| 180 | 16 | 84 | 180 | 46 | 54 |
| 120 | 20 | 80 | 120 | 54 | 46 |
| 60 | 16 | 84 | 60 | 53 | 47 |
| 30 | 21 | 79 | 30 | 48 | 52 |
| 15 | 22 | 78 | 15 | 47 | 53 |

The examples show the time dependence of the adsorption of various metals the lignins of the invention.

### Example 5: comparison of Pb(II) adsorption lignin (1) and lignin (2) to other adsorbents alkali lignin low sulfonate, AC and ion-exchangers.

Solutions of 25-1000 mg/kg of Pb(II) in demineralized water were prepared by dissolution of the required amount of Pb(NO₃)₂ to prepare a 1000 mg/kg solution. Subsequently, the 1000 mg/kg stock solution was diluted out to prepare the desired 25-800 mg/kg solutions.
To a given amount of adsorbent 20 mL of metal solution was added and shaken at room temperature for the duration of 3h. For the lignin adsorbents (lignin (1), lignin (2) and alkali lignin) 0,5 g was used for the other adsorbents (Dowex MAC3, lon-exchanger IV, Activated Carbon) 0,05g was used, all based of the total solids content of the materials.
Subsequently, the solid and liquid phases were separated by centrifugation. The initial and final Pb(II) content of the aqueous phase were determined by ICP-OES. The results are shown in Table 5.

**Table 5) Comparison of Pb(II) adsorption on various adsorbents**

| | | Dowex MAC3 | | | | | Ion exchanger IV | | | |
|---|---|---|---|---|---|---|---|---|---|---|
| Ci | | Cf | | | q | | Cf | | q | |
| [mg/kg] | | [mg/kg] | | | [mg/kg] | | [mg/kg] | | [mg/kg] | |
| 630 | | 430 | | | 80,0 | | 530 | | 40,0 | |
| 420 | | 240 | | | 72,0 | | 340 | | 32,0 | |
| 320 | | 160 | | | 64,0 | | 240 | | 32,0 | |
| 210 | | 91 | | | 47,6 | | 140 | | 28,0 | |
| 110 | | 33 | | | 30,8 | | 51 | | 23,6 | |
| 49 | | 9,8 | | | 15,7 | | 13 | | 14,4 | |
| 27 | | 0,31 | | | 10,7 | | 2,7 | | 9,7 | |
| | | | | | | | | | | |

| | | Activated Carbon | | | | | Alkali lignin low sulfonate | | | |
|---|---|---|---|---|---|---|---|---|---|---|
| Ci | | Cf | | q | | | Cf | | q | |
| [mg/kg] | | [mg/kg] | | [mg/g] | | | [mg/kg] | | [mg/g] | |
| 1000 | | 1000 | | 0,0 | | | 950 | | 2,0 | |
| 630 | | 580 | | 20,0 | | | 580 | | 2,0 | |
| 420 | | 380 | | 16,0 | | | 380 | | 1,6 | |
| 320 | | 280 | | 16,0 | | | 300 | | 0,8 | |
| 210 | | 170 | | 16,0 | | | 200 | | 0,4 | |
| 110 | | 73 | | 14,8 | | | 100 | | 0,4 | |
| 49 | | 23 | | 10,4 | | | 49 | | 0,0 | |
| 27 | | 5,9 | | 8,4 | | | 25 | | 0,1 | |
| | | | | | | | | | | |

| Lignin (1) | | | | | | Lignin (2) | | | | |
|---|---|---|---|---|---|---|---|---|---|---|
| Ci | Cf | | q | | | Ci | | Cf | | q |
| [mg/kg] | [mg/kg] | | [mg/g] | | | [mg/kg] | | [mg/kg] | | [mg/g] |
| 960 | 470 | | 19,6 | | | 950 | | 640 | | 12,4 |
| 570 | 150 | | 16,8 | | | 790 | | 450 | | 13,6 |
| 390 | 46 | | 13,8 | | | 590 | | 280 | | 12,4 |
| 290 | 21 | | 10,8 | | | 400 | | 120 | | 11,2 |
| 200 | 13 | | 7,5 | | | 300 | | 60 | | 9,6 |
| 98 | 6,1 | | 3,7 | | | 200 | | 22 | | 7,1 |
| 47 | 3,3 | | 1,7 | | | 100 | | 4,0 | | 3,8 |
| 23 | 2,3 | | 0,8 | | | 51 | | 1,3 | | 2,0 |

The examples show that the lignins of the invention have similar adsorption capacity to commercial activated carbon and ion exchange resins.

### Example 6: Comparison various lignins 100ppm Pb.

Solutions of 110 ppm Pb(II) in demineralized water were prepared by dissolution of the required amount of Pb(NO₃)₂. The pH of the solutions was adjusted to 6, 8 and 9 by addition of NaOH. To 0,5 g of lignin 20 mL of metal solution was added and shaken at room temperature for the duration of 3h. Subsequently, the solid and liquid phases were separated by centrifugation. The initial and final metal content of the aqueous phase were determined by ICP-OES. To quantify the transfer of colour to the treated solution UV-vis spectroscopy was used, the absorbance at 600 nm relative to the most strongly absorbing sample (Sample C) was compared: *UV rel.* The results are shown in Table 6. The lignin samples used were: A) Lignin (1), B) Lignin (2), C) Lignin Alkali- low sulfonate, D) CIMV- Lignin, E) Borresperse CA, F) Borretan 101, G) Wanin 734, H) Borretan 103.

**Table 6) Comparison of Pb(II) adsorption on various lignins**

| Lignin adsorbent | non adjusted pH | | pH 6 | | |
|---|---|---|---|---|---|
| | Ci = 98 [mg/kg] | | Ci = 104 [mg/kg] | | |
| | Cf | Ads | Cf | Ads | UV rel |
| | [mg/kg] | [%] | [mg/kg] | [%] | [-] |
| none | 98 | 0 | 98 | 5,8 | 0,026 |
| A | 6,8 | 93,1 | 6,5 | 93,8 | 0,049 |
| B | 7 | 92,9 | 5 | 95,2 | 0,029 |
| C | 92 | 6,1 | 85 | 18,3 | 1,000 |
| D | 41 | 58,2 | 26 | 75,0 | 0,026 |
| E | 97 | 1,0 | 92 | 11,5 | 0,176 |
| F | 91 | 7,1 | 91 | 12,5 | 0,230 |
| G | 91 | 7,1 | 90 | 13,5 | 0,094 |
| H | 93 | 5,1 | 88 | 15,4 | 0,081 |

| Lignin adsorbent | pH 8 | | pH 9 | | |
|---|---|---|---|---|---|
| | Ci = 103 [mg/kg] | | Ci = 103 [mg/kg] | | |
| | Cf | Ads | Cf | Ads | |
| | [mg/kg] | [%] | [mg/kg] | [%] | |
| none | 49 | 52,4 | 17 | 83,5 | |
| A | 6,5 | 93,7 | 6,5 | 93,7 | |
| B | 5 | 95,2 | 5 | 95,2 | |
| C | 85 | 17,5 | 85 | 17,5 | |
| D | 26 | 74,8 | 26 | 74,8 | |
| E | 92 | 10,7 | 92 | 10,7 | |
| F | 91 | 11,7 | 91 | 11,7 | |
| G | 90 | 12,6 | 90 | 12,6 | |
| H | 88 | 14,6 | 88 | 14,6 | |

This example shows that the lignins of the invention have superior adsorption capacity in combination with low color transfer to the treated contaminated water. It also shows that at elevated pH where the untreated solution precipitates out part of the Pb other lignins (C-H) hamper removal of Pb, whereas the lignins of the invention show enhanced removal.

### Example 7: Irreversibility of metal adsorption

Solutions of 25-1000 mg/kg of Pb(II) in demineralized water were prepared by dissolution of the required amount of Pb(NO₃)₂ a 1000 mg/kg solution. Subsequently, the 1000 mg/kg stock solutions were diluted out to prepare the desired 25-800 mg/kg solutions.

To 4 g of lignin (1) 160 mL of metal solution was added and shaken at room temperature for the duration of 3h. Subsequently, the solid and liquid phases were separated by filtration. The solid residue was washed with demineralized water and dried. To 2 g of dried residue 80 mL of a HCl solution with a pH of 2 was added and shaken at room temperature for the duration of 3h. Subsequently, the solid and liquid phases were separated by filtration. The solid residue was washed with demineralized water and dried. The initial and final metal content of the aqueous phase, the residue before the leaching test and the residue after the desorption test were determined by ICP-OES. The results are shown in Table 7.

**Table 7) Leaching test of Pb(II) adsorbed on lignin 1**

| | | | before desorption test | after desorption test | |
|---|---|---|---|---|---|
| Ci | Cf | Ads | q_{residue} | q_{residue} | Des |
| [mg/kg] | [mg/kg] | [%] | [mg/g] | [mg/g] | [%] |
| 1000 | 500 | 50 | 18 | 18 | 0,0 |
| 600 | 170 | 72 | 17 | 17 | 0,0 |
| 400 | 51 | 87 | 14 | 14 | 0,0 |
| 300 | 23 | 92 | 11 | 10 | 9,1 |
| 200 | 10 | 95 | 7,9 | 7,5 | 5,1 |
| 100 | 5,3 | 95 | 4,1 | 3,9 | 4,9 |
| 50 | 3,3 | 93 | 1,9 | 1,9 | 0,0 |
| 25 | 2,1 | 92 | 1 | 0,9 | 10,0 |

This example shows that the lignins of the invention show only limited desorption of the adsorbed metal ions even after severe treatment at pH 2, whereas it is mentioned in literature that the adsorption of cations is reversible for other lignin derivatives at low pH (ref).

## Claims

1. Lignin-based adsorption materials for treatment of contaminated fluids, wherein the lignin adsorption material is a high molecular weight, crosslinked lignin residue (A), resulting from a steam pre-treatment process of a lignocellulosic residue followed by the removal of the major part of the cellulose and hemicellulose components.,

2. Lignin based adsorption material according to claim 1, wherein the lignin residue (A) is gained from wheat straw, sugar cane bagasse or other agricultural residues.

3. Process for removal of metals from contaminated fluids by employing a lignin based adsorption material according to claim 1 and/or 2, comprising the following steps:
a) Contacting a lignin residue (A) with a to be treated metal contaminated fluid (B).
b) Separating the treated fluid from the residue to obtain a fluid with reduced metal content (C) and a metal containing solid residue (D).
c) Disposal of the treated fluid with reduced metal content (C).
d) Disposal of the metal containing residue (D).

4. Process according to claim 3, wherein the metal contaminated fluid (B) is derived from process water from technical, industrial, agricultural or domestic applications, drinking water or sewage water.

5. Process according to claim 3 or 4, wherein treatment temperature, at which component (A) is brought in contact with component (B) is in the range from freezing point of (B) up to a maximum temperature of 250°C.

6. Process according to one or more of the preceding claims, wherein treatment time in step a. lies between 1 and 1440 minutes and preferably the mixture is stirred, shaken or interspersed.

7. Process according to one or more of the preceding claims 3 to 6, wherein in step b. component (A) and component (B) are separated to yield a fluid phase with reduced metal content (C) and a metal containing solid residue (D), which are separated by filtration, sedimentation, centrifugation, decantation or flotation.
